# EUROPÄISCHE PATENTSCHRIFT

(11) **EP 2 981 168 B1**
(45) Veröffentlichungstag und Bekanntmachung des Hinweises auf die Patenterteilung: **01.01.2020**
(21) Anmeldenummer: 14718344.6
(22) Anmeldetag: 31.03.2014
(51) Int. Cl.: A01L 5/00, A01L 7/02, A01L 15/00

(54) **HUFREHEKEIL**
LAMINITIS WEDGE
CALE LAMINITE

(30) Priorität: 02.04.2013 DE 202013003027 U
(43) Veröffentlichungstag der Anmeldung: 10.02.2016
(73) Patentinhaber: Leps, Hermann-Josef, 45731 Waltrop (DE)
(72) Erfinder: Leps, Hermann-Josef, 45731 Waltrop (DE)
(74) Vertreter: Schneiders, Josef
(86) Internationale Anmeldenummer: PCT/EP2014/056392
(87) Internationale Veröffentlichungsnummer: WO 2014/161800

(56) Entgegenhaltungen:
- BE-A3- 1 019 344
- DE-U1- 29 701 859
- US-A1- 2010 223 893
- US-A1- 2011 067 366
- US-A1- 2012 279 184

## Beschreibung

Die Erfindung betrifft eine Hufbesohlung zur Befestigung unter dem Huf eines Tieres, insbesondere Pferdes, wobei die Hufbesohlung eine gleichmäßig ansteigende Höhe aufweist, so dass ein Bereich der Hufbesohlung geringer Höhe unterhalb des vorderen Bereichs des Hufes und ein Bereich größerer Höhe unterhalb des hinteren Bereichs des Hufes anbringbar ist.

Eine bei Pferden häufig auftretende Erkrankung ist die sog. Hufrehe (Laminitis). Hierbei handelt es sich um eine schmerzhafte Entzündung der Huflederhaut, bei der es sich um die Verbindung zwischen Hufkapsel und Hufbein handelt. Dabei beginnt sich die Hufkapsel von der Lederhaut abzulösen. Insbesondere tritt die Hufrehe im vorderen Zehenteil auf. Man unterscheidet zwischen akuter und chronischer Hufrehe.

Eine Hufrehe kann dadurch behandelt werden, dass der schmerzende, geschädigte Zeh entlastet wird. Bereits bekannt ist in diesem Zusammenhang die Verwendung von Keilen, die mit dem spitzen Ende nach vorne unter den Huf geklebt werden, so dass die Fußungslast auf den hinteren, gesunden Hufteil verlagert wird. Dies bedeutet für das Pferd eine deutliche Erleichterung beim Laufen. Bislang wurden derartige Keile insbesondere aus Gips modelliert oder aus einem harten Polystyrol hergestellt. Ebenso bekannt sind Hufschuhe mit ansteigendem Absatz.

Aus der US 2012/0279184 A1 ist ein Pad als Einlage in einer Pad-Boot-Kombination, insbesondere für Pferde bekannt, wobei Sphäroide geringer Dichte in einem Elastomermaterial eingebettet sind und das Pad eine Keilform aufweist.

Nachteilig macht sich bei den bisher verwendeten Keilen bemerkbar, dass sie aus einem sehr harten Material bestehen, weshalb die Behandlung von den Tieren nur schlecht toleriert wird. Darüber hinaus wird für die Modellierung einer entsprechenden Hufbesohlung aus Gips oder anderen selbsthärtenden Materialien relativ viel Zeit benötigt, innerhalb der das Pferd das entsprechende Bein heben und sein Gewicht entsprechend auf das andere (Vorder)bein verlagern muss. Da die Hufrehe zumeist an beiden Vordergliedmaßen gleichzeitig auftritt, ist dies für das Pferd nur schwer möglich und außerordentlich schmerzhaft.

Es stellt sich somit die Aufgabe, eine Hufbesohlung zur Verfügung zu stellen, die zum einen von Pferden besser toleriert wird und zum anderen sich innerhalb möglichst kurzer Zeit unter dem Huf anbringen lässt.

Diese Aufgabe wird erfindungsgemäß gelöst durch eine Hufbesohlung nach Anspruch 1.

Eine Hufbesohlung aus einem derartigen Material hat sich als besonders vorteilhaft herausgestellt, da es zwar ausreichend widerstandsfähig, gleichzeitig aber hinreichend elastisch ist, so dass es einerseits eine ausreichende Haltbarkeit trotz des hohen Gewichts des Tieres aufweist und der Therapiezweck erreicht, andererseits aber vom Tier gut toleriert wird. In der Regel kann die Hufbesohlung von einem Pferd ca. 2 bis 3, je nach Temperament des Pferdes bis zu 4 Wochen getragen werden, erst anschließend ist ein Austausch der Hufbesohlung je nach Verlauf der Erkrankung erforderlich.

Erfindungsgemäß ist für die Hufbesohlung die Verwendung eines Verbundwerkstoffs aus Gummigranulat und Bindemittel. Dieses weist nicht nur eine ausreichende Elastizität und Widerstandsfähigkeit, sondern auch eine gewisse Wasserdurchlässigkeit auf, so dass Feuchtigkeit nach außen abgeleitet werden kann. Auf diese Weise wird die Bildung von Fäulnis in der Hufsohle vermieden, die bei der Verwendung von Gipsverbänden zum Teil auftritt.

Die Hufbesohlung wird in der Regel mit Hilfe eines geeigneten Klebebandes unterhalb des Hufes befestigt. Dies kann innerhalb sehr kurzer Zeit geschehen. Im Gegensatz dazu wird bei der Verwendung von Gips oder aushärtenden Kunstharzmaterialien nach dem Stand der Technik eine deutlich längere Zeit zum Aushärten benötigt, was die Behandlung des Tieres erschwert. In Fällen, in denen sich die Abnahme des Hufeisens als schwierig erweist, kann die Hufbesohlung auch unter dem Hufeisen festgelegt werden.

Neben der Elastizität des Materials für die Hufbesohlung ist darüber hinaus von Vorteil, dass der Werkstoff in gewissem Maße plastisch ist. Auf diese Weise kann sich das Material partiell der Hufform anpassen, so dass es noch besser auf das individuelle Tier abgestimmt ist. Bei Bedarf kann die Form der Hufbesohlung auch vor oder bei der Festlegung am Huf mit einem scharfen, stabilen Werkzeug angepasst werden.

Die Hufbesohlung dient insbesondere der Vorbeugung und/oder Behandlung von Hufrehe bei Pferden, ist jedoch nicht hierauf beschränkt. Ebenso behandeln lassen sich beispielsweise Sehnenverletzungen und Unterstützungsbanderkrankungen, da der Einsatz der Hufbesohlung für eine Entlastung der Sehnen/Unterstützungsbänder sorgt. Auch bei anderen Indikationen, bei denen eine Trachtenhochstellung angezeigt ist, kann die Hufbesohlung zum Einsatz kommen. Prophylaktisch kann die Hufbesohlung bei Nachgeburtsverhaltung und Überfütterung verwendet werden, bevor sich dies in einer Hufrehe manifestiert. Grundsätzlich ist allerdings auch die Verwendung für andere Huftiere denkbar.

Wie bereits erwähnt, nimmt die Höhe der Hufbesohlung vom vorderen Bereich, der unterhalb der Zehe angebracht wird, zum hinteren Bereich des Hufes zu. Die Hufbesohlung weist somit einen vorderen dünnen und einen hinteren dickeren Bereich auf. Grundsätzlich sind dabei unterschiedliche Formen der Hufbesohlung denkbar, insbesondere kann die Hufbesohlung aber eine weitgehend regelmäßige Keilform aufweisen, d.h. die Seitenflächen der Hufbesohlung laufen nach vorne in einem spitzen Winkel aufeinander zu. In der Draufsicht hingegen hat die Hufbesohlung in diesem Fall eine Rechteckform.

Alternativ ist es auch möglich, dass die Hufbesohlung in der Draufsicht eine Hufeisenform aufweist, wobei auch in diesem Fall die Höhe der Hufbesohlung vom vorderen zum hinteren Bereich in der Seitenansicht betrachtet zunimmt. Durch Verwendung einer Hufbesohlung in Hufeisenform wird die Hufbesohlung noch stärker an die natürliche Form des Pferdehufes angepasst. Die Hufeisenform ist so zu verstehen, dass lediglich die Außenkontur der Hufbesohlung der Außenkontur eines Hufeisens entspricht, der Innenbereich des Hufeisens aber ebenfalls vom Verbundmaterial ausgefüllt ist. Es handelt sich somit, anders als bei einem echten Hufeisen, nicht lediglich um einen schmalen, bogenförmig verlaufenden Materialstreifen mit offenem Innenraum.

Der Winkel, in dem die Seitenflächen der Hufbesohlung vom Bereich größerer Höhe zum Bereich geringer Höhe aufeinander zulaufen, beträgt typischerweise 5° bis 30°, bevorzugt 10° bis 25°, insbesondere 18° bis 22°. Dies gilt unabhängig von der sonstigen Form der Hufbesohlung, also unabhängig davon, ob diese in der Draufsicht eine Rechteck-, eine Hufeisen- oder eine sonstige Form aufweist. In der Regel nimmt die Dicke der Hufbesohlung im vorderen Bereich allerdings nicht bis auf 0 ab, so dass sich insgesamt in der Seitenansicht im Wesentlichen eine Trapezform ergibt, wobei gewisse Abweichungen von der Parallelität der Vorder- und Hinterseite möglich sind.

Die Hufbesohlung verfügt zumindest teilweise über angefaste Kanten, wodurch das Tragen für das Tier angenehmer wird. Insbesondere wird das seitliche Verkippen des Hufes erleichtert. Bei den angefasten Kanten handelt es sich vor allem um die Kanten in Längsrichtung der Hufbesohlung, d. h. die Kanten, die bei am Tier fixierter Hufbesohlung vom vorderen zum hinteren Zehbereich verlaufen. Hierbei sind die Kanten auf der Unterseite, optional auch auf der Oberseite angefast. Anstelle einer Anfasung ist es auch möglich, die Kanten abzurunden, wobei hier wiederum die in Längsrichtung der Hufbesohlung verlaufenden Kanten an der Unterseite von Bedeutung sind, optional aber auch die Kanten an der Oberseite abgerundet sein können. Im Falle eine Abrundung kann die Abrundung bspw. einen Radius von 10 mm aufweisen.

Von besonderer Bedeutung für das Hufbesohlungsmaterial ist, wie bereits erwähnt, die Elastizität, die in einem Bereich liegt, dass der Therapiezweck erfüllt wird und das Material vom Pferd toleriert wird. Die Shore-A Härte liegt im Bereich von 60 bis 90, insbesondere 65 bis 85.

Zur Herstellung des Verbundmaterials wird ein Gummigranulat mit einem Bindemittel gemischt und in die entsprechende Form gebracht. Derartige Materialien sind grundsätzlich aus dem Stand der Technik bekannt, insbesondere zur Herstellung von Laufbahnen auf Sportplätzen, für Kinderspielplätze oder als Schwimmbadumrandung. Das Material ist sehr strapazierfähig, witterungsbeständig, rutschfest, bruchsicher und fußwarm.

Verschiedene Kautschukarten aus dem Stand der Technik können zur Herstellung des Gummigranulats eingesetzt werden. Besonders bevorzugt ist ein Styrol-Butadien-Kautschuk(SBR). Denkbar istjedoch auch die Verwendung von Ethylen-Propylen-Dien-Kautschuk (EPDM). Schließlich können auch Chloropen-Kautschuk oder Naturkautschuk oder sonstige Kautschukarten verwendet werden. Typischerweise weist das noch nicht verarbeitete Gummigranulat eine Körnung von 1 bis 5 mm auf.

Als Bindemittel wird bevorzugt Polyurethan verwendet. Ebenso verwendbar sind andere Klebstoffe wie Acrylate, Silikone etc.

Typischerweise liegt der Bindemittelgehalt des Verbundwerkstoffs zwischen 5 und 30 Gew.-%. Bevorzugt ist ein Bereich von 15 bis 25, insbesondere ca. 20 Gew.-%.

Die Maße der Hufbesohlung könnenje nach Tier variieren. Die Länge, d.h. das Maß von der Vorder- zur Hinterkante, kann beispielsweise 60 bis 140 mm betragen. Typisch sind beispielsweise Längen für unterschiedlich große Hufe von 70, 90, 110 und 130 mm.

Die Höhe der Hufbesohlung im hinteren Bereich kann sinnvollerweise 30 bis 70 mm sein, insbesondere 40 bis 60 mm. Im vorderen Bereich ist eine typische Höhe 5 bis 15, insbesondere ca. 10 mm.

Die Breite einer typischen Hufbesohlung liegt bei 50 bis 140 mm.

Sofern die Kanten, insbesondere die Längskanten der Hufbesohlung angefast sind, betragen Breite und Höhe der Fase typischerweise 5 bis 15 mm.

Die Erfindung wird anhand der beigefügten Figuren beispielhaft näher erläutert. Es zeigen:
- Figur 1:: eine erfindungsgemäße Hufbesohlung in der Seitenansicht;
- Figur 2:: eine erfindungsgemäße Hufbesohlung in einer Ansicht von hinten und
- Figur 3:: eine alternative Ausführungsform der erfindungsgemäßen Hufbesohlung in der Draufsicht.

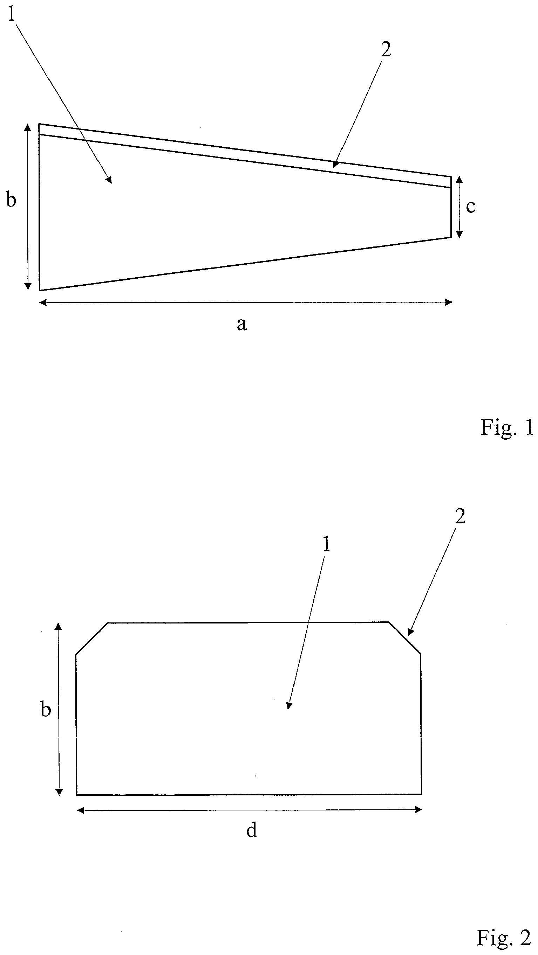

In Figur 1 ist eine erfindungsgemäße Hufbesohlung 1 in der Seitenansicht gezeigt. Die Hufbesohlung 1 hat einen keilförmigen Aufbau, wobei die Höhe von vorne nach hinten zunimmt. Darüber hinaus weisen zumindest einige Kanten eine Fase 2 auf. Je nach Größe des Tieres und damit auch des Hufes beträgt die Länge a der Hufbesohlung z. B. 70, 90, 110 oder 130 mm, die Höhe b im hinteren Bereich 30, 40, 50 oder 60 mm und die Höhe c im vorderen Bereich ca. 10 mm. Die Fase 2 hat eine Höhe von 5 bis 15 mm, wobei die Fase 2 auch im vorderen Bereich schmaler werden kann.

In Figur 2 ist die Hufbesohlung 1 aus Figur 1 in einer Ansicht von hinten dargestellt. Man erkennt wiederum die Fase 2 mit einer Höhe von ca. 10 mm und einer Breite von ca. 15 mm. Die Breite d der Hufbesohlung beträgt z. B. 70, 90 oder 110 mm.

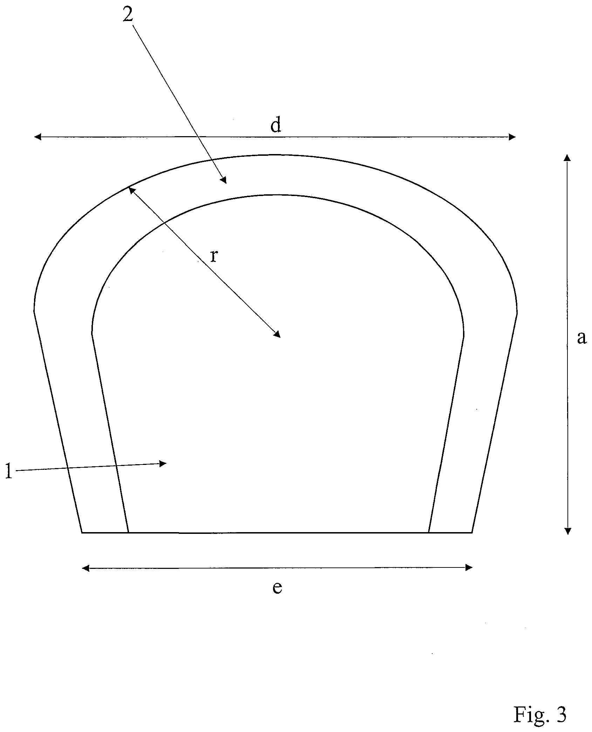

In Figur 3 ist eine alternative Ausführungsform der Hufbesohlung 1 in der Draufsicht dargestellt. Die Hufbesohlung 1 hat in diesem Fall die Außenkontur eines Hufeisens, es handelt sich aber insgesamt um ein massives Stück Verbundmaterial, das im Randbereich eine Fase 2 mit einer Breite von ca. 15 mm aufweist. Die Länge a der Hufbesohlung beträgt wiederum, je nach Größe des Tieres, 70, 90, 110 oder 130 mm, die Gesamtbreite d 90, 110 oder 130 mm und die Breite e im hinteren Bereich 70, 90 oder 110 mm. Der Radius r beträgt 30, 45, 55 oder 65 mm.

Selbstverständlich handelt es sich bei den Figuren nur um Ausführungsbeispiele, entsprechend sind auch die Maße nur typische Größenangaben, von denen abgewichen werden kann, ohne die Lehre der Erfindung zu verlassen.

## Patentansprüche

1. Hufbesohlung zur Befestigung unter dem Huf eines Tieres, insbesondere Pferdes, wobei die Hufbesohlung (1) eine gleichmäßig ansteigende Höhe aufweist, so dass ein Bereich der Hufbesohlung (1) geringer Höhe unterhalb des vorderen Bereichs des Hufes und ein Bereich größerer Höhe unterhalb des hinteren Bereichs des Hufes anbringbar ist, wobei die Hufbesohlung (1) aus einem Verbundwerkstoff aus Gummigranulat und Bindemittel aufgebaut ist, und die Kanten der Hufbesohlung (1) auf der Unterseite in Längsrichtung zumindest teilweise angefast oder abgerundet sind, **dadurch gekennzeichnet, dass** der Verbundwerkstoff eine Shore-A Härte von 60 bis 90 aufweist.

2. Hufbesohlung nach Anspruch 1, **dadurch gekennzeichnet, dass** der Verbundwerkstoff eine Shore-A Härte von 65 bis 85 aufweist.

3. Hufbesohlung nach Anspruch 1 oder 2, **dadurch gekennzeichnet, dass** sich das Gummigranulat aus einem Styrol-Butadien-Kautschuk zusammensetzt.

4. Hufbesohlung nach Anspruch 1 oder 2, **dadurch gekennzeichnet, dass** sich das Gummigranulat aus einem Ethylen-Propylen-Dien-Kautschuk zusammensetzt.

5. Hufbesohlung nach einem der Ansprüche 1 bis 4, **dadurch gekennzeichnet, dass** das Bindemittel ein Polyurethan ist.

6. Hufbesohlung nach einem der Ansprüche 1 bis 5, **dadurch gekennzeichnet, dass** der Verbundwerkstoff einen Bindemittelgehalt von 5 bis 30 Gew.-%, vorzugsweise 15 bis 25 Gew.-% aufweist.

7. Hufbesohlung nach einem der Ansprüche 1 bis 6, **dadurch gekennzeichnet, dass** die Hufbesohlung (1) der Vorbeugung und/oder Behandlung von Hufrehe, Sehnenverletzungen oder Unterstützungsbanderkrankungen dient.

8. Hufbesohlung nach einem der Ansprüche 1 bis 7, **dadurch gekennzeichnet, dass** die Seitenflächen der Hufbesohlung vom Bereich größerer Höhe zum Bereich geringer Höhe in einem Winkel von 5° bis 30°, bevorzugt 10° bis 25°, insbesondere 18° bis 22° aufeinander zulaufen.

9. Hufbesohlung nach einem der Ansprüche 1 bis 8, **dadurch gekennzeichnet, dass** die Hufbesohlung (1) eine Keilform aufweist.

10. Hufbesohlung nach einem der Ansprüche 1 bis 8, **dadurch gekennzeichnet, dass** die Außenkontur der Hufbesohlung (1) in der Draufsicht der Außenkontur eines Hufeisens entspricht.

## Claims

1. Hoof soling element to be attached under the hoof of an animal, in particular a horse, wherein said hoof soling element (1) is of uniformly increasing height which enables an area of the hoof soling element (1) that is of lesser height to be attached under the front portion of the hoof and an area of greater height under the rear portion of the hoof, wherein the hoof soling element (1) is composed of a composite material consisting of rubber granulate and bonding agent, and the edges of the hoof soling element (1) are at least partially chamfered or rounded on the underneath in longitudinal direction, **characterized in that** said composite material has a Shore A hardness ranging between 60 and 90.

2. Hoof soling element according to claim 1, **characterized in that** the composite material has a Shore A hardness ranging between 65 and 85.

3. Hoof soling element according to claim 1 or 2, **characterized in that** the rubber granulate is composed of a styrene butadiene rubber.

4. Hoof soling element according to claim 1 or 2, **characterized in that** the rubber granulate is composed of an ethylene propylene diene rubber.

5. Hoof soling element according to any of claims 1 to 4, **characterized in that** the bonding agent is a polyurethane.

6. Hoof soling element according to any of claims 1 to 5, **characterized in that** the composite material has a bonding agent content of between 5 and 30 % w/w, preferably between 15 and 25 % w/w.

7. Hoof soling element according to any of claims 1 to 6, **characterized in that** the hoof soling element (1) serves to prevent and/or treat laminitis, tendon injuries or suspensory ligament diseases.

8. Hoof soling element according to any of claims 1 to 7, **characterized in that** the side faces of the hoof soling element taper from the area of greater height to the area of lesser height at an angle ranging between 5° and 30°, preferably between 10° and 25°, and in particular between 18° and 22°.

9. Hoof soling element according to any of claims 1 to 8, **characterized in that** the hoof soling element (1) has the shape of a wedge.

10. Hoof soling element according to any of claims 1 to 8, **characterized in that** the outer contour of the hoof soling element (1) corresponds to the outer contour of a horseshoe when viewed from above.

## Revendications

1. Semelle de sabot destinée à être fixée sous le sabot d'un animal, notamment d'un cheval, la semelle de sabot (1) présentant une hauteur qui croît de manière régulière de telle sorte qu'une région de la semelle de sabot (1) de plus faible hauteur puisse être disposée en dessous de la région avant du sabot et une région de plus grande hauteur puisse être disposée en dessous de la région arrière du sabot, la semelle de sabot (1) étant formée en un matériau composite d'un granulat de caoutchouc et d'un liant, et les bords de la semelle de sabot (1) étant au moins partiellement rognés ou arrondis sur le côté inférieur dans la direction longitudinale, **caractérisée en ce que** le matériau composite présente une dureté Shore A de 60 à 90.

2. Semelle de sabot selon la revendication 1, **caractérisée en ce que** le matériau composite présente une dureté Shore A de 65 à 85.

3. Semelle de sabot selon la revendication 1 ou 2, **caractérisée en ce que** le granulat de caoutchouc est composé par un caoutchouc de styrène-butadiène.

4. Semelle de sabot selon la revendication 1 ou 2, **caractérisée en ce que** le granulat de caoutchouc est composé par un caoutchouc d'éthylène-propylène-diène.

5. Semelle de sabot selon l'une quelconque des revendications 1 à 4, **caractérisée en ce que** le liant est un polyuréthane.

6. Semelle de sabot selon l'une quelconque des revendications 1 à 5, **caractérisée en ce que** le matériau composite présente une teneur en liant de 5 à 30 % en poids, de préférence de 15 à 25 % en poids.

7. Semelle de sabot selon l'une quelconque des revendications 1 à 6, **caractérisée en ce que** la semelle de sabot (1) sert à la prévention et/ou au traitement de la fourbure, des blessures au tendon ou des maladies des ligaments accessoires.

8. Semelle de sabot selon l'une quelconque des revendications 1 à 7, **caractérisée en ce que** les surfaces latérales de la semelle de sabot présentent l'une par rapport à l'autre depuis la région de plus grande hauteur jusqu'à la région de plus faible hauteur un angle de 5° à 30°, de préférence de 10° à 25°, notamment de 18° à 22°.

9. Semelle de sabot selon l'une quelconque des revendications 1 à 8, **caractérisée en ce que** la semelle de sabot (1) présente une forme en coin.

10. Semelle de sabot selon l'une quelconque des revendications 1 à 8, **caractérisée en ce que** le contour extérieur de la semelle de sabot (1) correspond au contour extérieur d'un fer à cheval en vue de dessus.
